(19) Europäisches Patentamt
European Patent Office
Office européen des brevets

(11) EP 4 418 596 A1

(12) EUROPEAN PATENT APPLICATION

(43) Date of publication:
21.08.2024 Bulletin 2024/34

(21) Application number: 24157570.3

(22) Date of filing: 14.02.2024

(51) International Patent Classification (IPC):
H04L 5/00 (2006.01)          H04W 52/02 (2009.01)

(52) Cooperative Patent Classification (CPC):
H04L 5/0048; H04L 5/00; H04L 5/0001;
H04W 52/02

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 17.02.2023  US 202363446614 P
28.03.2023  US 202363455022 P
18.01.2024  US 202418416369

(71) Applicant: Samsung Electronics Co., Ltd.
Suwon-si, Gyeonggi-do 16677 (KR)

(72) Inventors:
• BAE, Jung Hyun
San Jose, CA, 95134 (US)
• AWADIN, Mohamed
San Jose, CA, 95134 (US)

(74) Representative: Kuhnen & Wacker
Patent- und Rechtsanwaltsbüro PartG mbB
Prinz-Ludwig-Straße 40A
85354 Freising (DE)

(54) **SYSTEM AND METHOD FOR PROCESSING CSI-RS IN FULL DUPLEX OPERATION MODE**

(57) A system and a method are disclosed for a terminal in a wireless communication system. The method includes monitoring for at least one of a first condition or a second condition, wherein the first condition includes a CSI-RS or a PDSCH overlapping with an uplink subband in a subband full-duplex operation and becoming non-contiguous in a frequency domain, and wherein the second condition includes different network antenna patterns or power patterns being used in a network energy saving operation for transmission of the CSI-RS; and relaxing processing requirements related to at least one of a processing timeline or occupied computational resources, in response to the first condition or the second condition occurring.

FIG. 8

EP 4 418 596 A1

**Description**

**TECHNICAL FIELD**

The disclosure generally relates to processing a channel state information-reference signal (CSI-RS). More particularly, the subject matter disclosed herein relates to improvements to processing a CSI-RS in a full duplex (FD) operation mode.

**SUMMARY**

Due to the presence of an uplink (UL) subband in an FD operation, a CSI-RS or CSI report may span wide frequency band and collide with the resource blocks (RBs) configured/indicated for the UL subband. Accordingly, it may be beneficial to determine the impact of different solutions on the CSI computation time and CSI processing unit (CPU) occupation.

In an FD operation, a gNB may utilize different antenna elements, different transmit powers, apply different beams, etc., in subband full duplex (SBFD) symbols and non-SBFD symbols. Therefore, issues experienced in FD operation may also be present when the gNB switches between different spatial domains or power domains for network energy saving purposes.

The following options in Table 1 below have been proposed during 3rd generation partnership project (3GPP) standardization for handling the collision of CSI-RS or CSI report with the UL subband.

Table 1

| **Proposal 1-11a** |
| --- |
| For CSI-RS resource set frequency domain resource allocation and CSI reporting configuration across non-contiguous DL subbands, consider the following options: |
| - Option 1: Two contiguous CSI-RS resources link to one CSI report |
| - Option 2: **Non-contiguous CSI-RS** resource |
|      • Option 2-1: Non-contiguous CSI-RS resource allocation |
|      • Option 2-2: Contiguous CSI-RS resource allocation and non-contiguous CSI-RS resource derived by excluding frequency resources of UL subband and guardband(s) |
|      • FFS : Details of CSI determination and reporting based on the non-contiguous CSI-RS resource. |
| - Option 3: Contiguous CSI-RS resource configuration with overlapping resources with UL subband and guardband(s) |
|      • Option 3-1: UE skips a CSI measurement and report for a CSI reporting configuration if any CSI-RS resource collides with UL subband or guardband |
|      • Option 3-2: UE skips the subband CSI reporting to a CSI subband colliding with UL subband and guardband(s) |
|      • Option 3-3: CSI reporting setting configures that the CSI is not reported for CSI subband(s) colliding with UL subband and guardband(s) |
|      - FFS applicability for TRS |

As shown above, in Option 1, two CSI-RS resources are linked to one CSI report such that each CSI-RS does not overlap with the UL subband.

In Option 2, either the same CSI-RS is allocated in a non-contiguous manner in the frequency domain or the CSI-RS is allocated in contiguous manner in the frequency domain and a user equipment (UE) derives the non-contiguous portions of CSI-RS based on the overlapping with the UL subband or guardbands.

In the Option 3, contiguous CSI-RS configured and overlaps with the UL subband. In this case, the UE skips the whole CSI report if any of the CSI-RS linked with this report collides with UL subband, the UE skips the CSI subband that collides with the UL subband, or the UE is not requested to report CSI subband that collides with UL subband.

It is also possible that a CSI-RS spans two sets of orthogonal frequency division multiplexing (OFDM) symbols in the time domain, where one of them is for an SBFD symbol and the other one is a non-SBFD symbol. In this case, it is possible that the same CSI-RS port is transmitted in SBFD and non-SBFD symbols, which may impact the measured/reported CSI. Therefore, solutions are needed to handle this case.

Further, in legacy new radio (NR), when a tracking reference signal (TRS) is configured, it is not associated with any report and does not occupy CPU. However, a TRS may be further enhanced such that a UE can report time domain channel properties (TDCP). Therefore, it may be beneficial to determine the timeline when using a TRS for reporting TDCP compared with a TRS without any reporting.

Additionally, if a precoding resource group (PRG) is configured such that a precoding granularity is wideband, and a physical downlink shared channel (PDSCH) is scheduled/configured to span non-contiguous DL subbands, a PDSCH processing timeline should also be defined. In legacy NR, when a PRG is configured as wideband, a UE is not expected to be scheduled with non-contiguous physical resource blocks (PRBs), and thus, the UE may assume that the same precoding is applied to the allocated resource associated with a same transmission configuration indication (TCI) state or a same quasi co-location (QCL) assumption.

To overcome these issues, systems and methods are described herein for relaxing processing requirements in terms of timeline and occupied computational resources when a signal, e.g., a CSI-RS, or a channel, e.g., a PDSCH, collides with a UL subband for an SBFD operation.

In accordance with an aspect of the disclosure, a procedures are provided to adjust a processing time for a non-contiguous CSI-RS.

In accordance with another aspect of the disclosure, an algorithm is provided to reflect an impact of a non-contiguous CSI-RS on an occupied CPU.

In accordance with another aspect of the disclosure, an algorithm is provided to reflect an impact on CPU occupation when the same CSI-RSs or different CSI-RSs are associated with different spatial or power patterns or sub-configurations in a network energy saving procedure.

In accordance with another aspect of the disclosure, a method is provided to accurately reflect a number of simultaneously active CSI-RSs.

In accordance with another aspect of the disclosure, procedures are provided for handling a case in which a same CSI-RS port occupies SBFD and non-SBFD symbols.

In accordance with another aspect of the disclosure, a PDSCH processing timeline is relaxed when a PDSCH spans non-contiguous DL subbands and a PRG is configured as wideband.

In accordance with another aspect of the disclosure, for a TRS used for calculating TDCP, procedures are provided to capture a UE processing overhead.

In an embodiment, a method comprises monitoring for at least one of a first condition or a second condition, wherein the first condition includes a CSI-RS or a PDSCH overlapping with an uplink subband in a subband full-duplex operation and becoming non-contiguous in a frequency domain, and wherein the second condition includes different network antenna patterns or power patterns being used in a network energy saving operation for transmission of the CSI-RS; and relaxing processing requirements related to at least one of a processing timeline or occupied computational resources, in response to the first condition or the second condition occurring

In an embodiment, a terminal comprises a transceiver; and a processor configured to monitor for at least one of a first condition or a second condition, wherein the first condition includes a CSI-RS or a PDSCH overlapping with an uplink subband in a subband full-duplex operation and becoming non-contiguous in a frequency domain, and wherein the second condition includes different network antenna patterns or power patterns being used in a network energy saving operation for transmission of the CSI-RS; and relax processing requirements related to at least one of a processing timeline or occupied computational resources, in response to the first condition or the second condition occurring.

**BRIEF DESCRIPTION OF THE DRAWINGS**

In the following section, the aspects of the subject matter disclosed herein will be described with reference to exemplary embodiments illustrated in the figures, in which:

FIG. 1 illustrates an example of a processing timeline for an aperiodic CSI reporting linked to an aperiodic CSI-RS or CSI-interference measurement (IM);
FIG. 2 illustrates an example of a timeline for an aperiodic CSI report based on a periodic CSI-RS;
FIG. 3 illustrates an example of CPU occupation for a P/SP CSI report;
FIG. 4 illustrates an example of CPU occupation for an aperiodic CSI report;
FIG. 5 illustrates an example of a predefined value $\Delta$ being added to a $Z'_{ref}$ value for a non-contiguous CSI-RS, according to an embodiment;
FIG. 6 illustrates an example of adjusting a CSI reference resource and Z' by $\Delta$, according to an embodiment;
FIG. 7 illustrates an example of CPU occupation for P/SP CSI reporting based on a P/SP non-contiguous CSI-RS, according to an embodiment;
FIG. 8 is a flowchart illustrating a method performed by a terminal, according to an embodiment;
FIG. 9 is a block diagram of an electronic device in a network environment, according to an embodiment.
FIG. 10 shows a system including a UE and a gNB in communication with each other.

## DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "twodimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

## CSI Processing Timeline

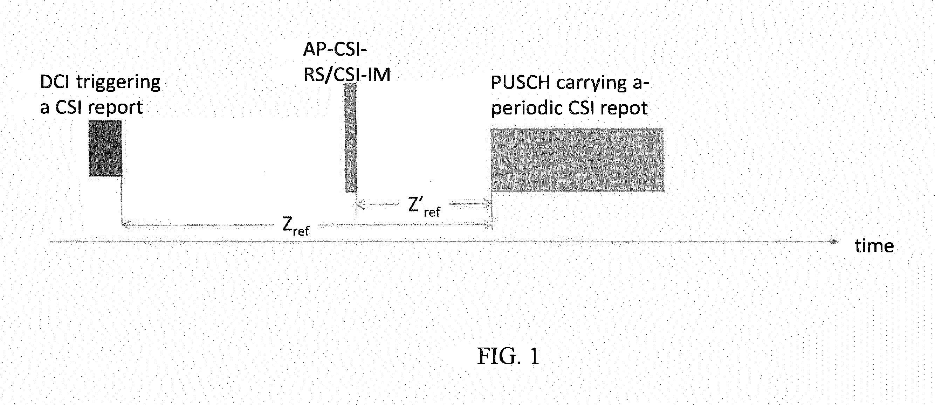

FIG. 1 illustrates an example of a processing timeline for an aperiodic CSI reporting linked to an aperiodic CSI-RS or CSI-IM.

Referring to FIG. 1, $Z_{ref}$ is defined as a minimum time gap between a last symbol of a physical downlink control channel (PDCCH), e.g., downlink control information (DCI), triggering an aperiodic CSI report and a first symbol of a physical uplink shared channel (PUSCH) carrying the report. The purpose of $Z_{ref}$ is to ensure enough time for PDCCH detection/decoding for receiving the CSI reporting triggering DCI, channel estimation, plus CSI calculation.

$Z'_{ref}$ is defined as a minimum time gap between a last symbol carrying an aperiodic CSI-RS for channel measurement (CM), an AP-CSI-RS, or AP-CSI-IM associated with the triggered report. $Z'_{ref}$ is used when an aperiodic CSI report is associated with an AP-CSI-RS/AP-CSI-IM. When an aperiodic CSI report is associated with a periodic/semi-persistent (P/SP) CSI-RS or CSI-IM the timeline depends on defining "the reference resource" as will be described later.

Herein, $Z_{ref}$ and $Z'_{ref}$ may also be referred to as $Z$ and $Z'$, respectively.

For an aperiodic CSI report, the timeline illustrated in FIG. 1 should be satisfied in order for a UE to provide a valid report.

However, if $Z_{ref}$ is not satisfied, the UE may ignore the scheduling DCI in the PDCCH, if no hybrid automatic repeat request (HARQ)-acknowledgement (ACK) or transport block (TB) is multiplexed on the PUSCH.

If $Z'_{ref}$ is not satisfied, the UE may ignore the scheduling DCI in the PDCCH, if the number of triggered reports is one and no HARQ-ACK or TB is multiplexed on the PUSCH. Otherwise, the UE is not required to update the CSI for an n-th triggered CSI report.

When P/SP CSI-RS/CSI-IM is used for channel/interference measurement, the UE is not expected to measure channel/interference on a CSI-RS/CSI-IM whose last OFDM symbol is received 0 to $Z'$ symbols before transmission time of a first OFDM symbol of AP-CSI reporting.

Also, a CSI-RS shall be on or before a CSI reference resource determined by $n_{CSI\_ref}$, which is a smallest value that is greater than or equal to $\left\lfloor Z'/N_{symb}^{slot} \right\rfloor$, such that a slot $n$-$n_{CSI\_ref}$ corresponds to a valid downlink slot.

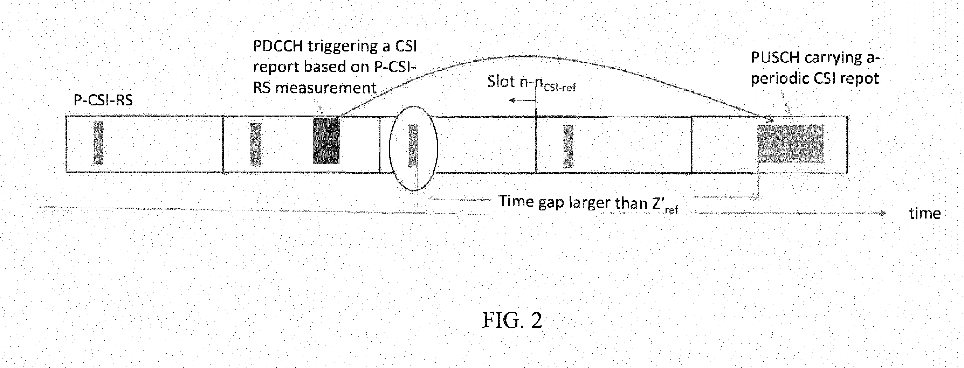

FIG. 2 illustrates an example of a timeline for an aperiodic CSI report based on a periodic CSI-RS.

For a P/SP CSI report based on a P/SP CSI-RS, $n_{CSI\_ref}$ is equal to predefined values as provided in 3GPP TS 38.214, based DL numerology and a number of reference signals (RSs) configured for channel measurements.

For example, N=4 for 15kHz, N=8 for 30kHz, N=16 for 60kHz, and N=32 for 120kHz in case of a CSI report without a CSI-RS resource indicator (CRI). Further, N=5 for 15kHz, N=10 for 30kHz, N=20 for 60kHz, and N=40 for 120kHz in case of a CSI report with a CRI.

A slot in a serving cell shall be considered to be a valid downlink slot if it includes at least one higher layer configured downlink or flexible symbol, and does not fall within a configured measurement gap for that UE.

If there is no valid downlink slot for the CSI reference resource corresponding to a CSI report setting in a serving cell, CSI reporting is omitted for the serving cell in uplink slot $n'$.

When DCI trigger multiple aperiodic CSI reports, the value of $Z$ and $Z'$ may be $Z = \max\limits_{m=0,\ldots,M-1}(Z(m))$ and $Z' = \max\limits_{m=0,\ldots,M-1}(Z'(m))$, where M is a number of updated CSI report(s) determined based on available CPUs, $(Z(m), Z'(m))$ corresponds to an m-th updated CSI report.

Multiple tables are provided in 3GPP TS 38.214 to determine $Z$ and $Z'$ based on the reported quantities.

## CPU for CSI Processing

A UE indicates, to a gNB, a total number of available CPUs ($N_{CPU}$) within a component carrier (CC) and across all CCs via capability signaling: *simultaneousCSI-ReportsPerCC* and *simultaneousCSI-ReportsAllCC*.

For a CSI report with *CSI-ReportConfig* with a higher layer parameter *reportQuantity* that is not set to 'none', the CPU(s) are occupied for a number of OFDM symbols.

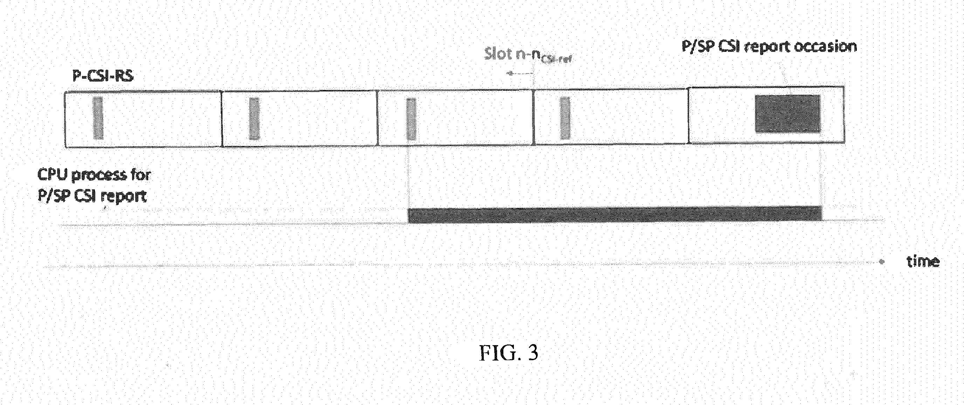

FIG. 3 illustrates an example of CPU occupation for a P/SP CSI report.

Referring to FIG. 3, a P/SP CSI report (excluding an initial SP CSI report on a PUSCH after a PDCCH triggering the report) occupies CPU(s) from a first symbol of an earliest one of each CSI-RS/CSI-IM/synchronization signal block (SSB) resource for channel or interference measurement, or a respective latest CSI-RS/CSI-IM/SSB occasion no later than a corresponding CSI reference resource, until a last symbol of a PUSCH/PUCCH carrying the report.

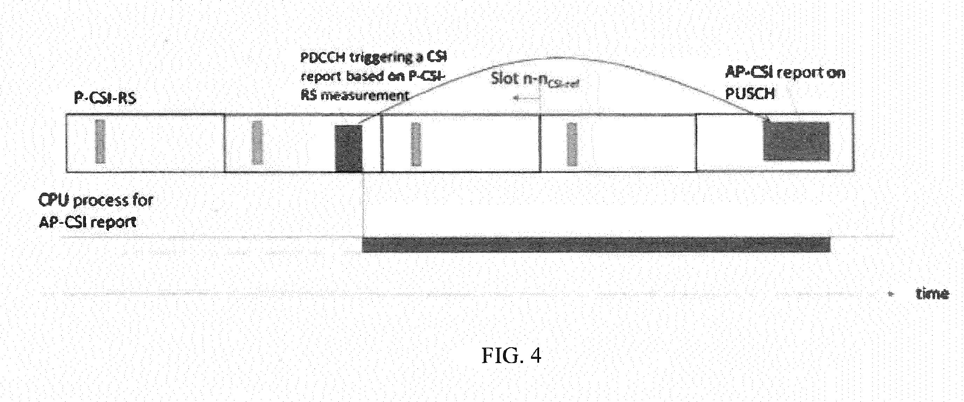

FIG. 4 illustrates an example of CPU occupation for an aperiodic CSI report.

Referring to FIG. 4, an aperiodic CSI report occupies CPU(s) from a first symbol after a PDCCH triggering the CSI report until a last symbol of a PUSCH carrying the report.

An initial SP CSI report is treated similar to an aperiodic CSI report as illustrated in FIG. 4, while subsequent reports are treated as illustrated in FIG. 3.

For a P3 procedure for beam management, there is no report. Therefore, CPU occupancy is defined as follows.

For a CSI report with *CSI-ReportConfig* with a higher layer parameter *reportQuantity* set to 'none' and *CSI RS-ResourceSet* with higher layer parameter *trs-Info* is not configured, the CPU(s) are occupied for a number of OFDM symbols.

More specifically, an SP CSI report (excluding an initial SP CSI report on a PUSCH after PDCCH triggering the report) occupies CPU(s) from a first symbol of an earliest one of each transmission occasion of a P/SP CSI-RS/SSB resource for channel measurement for L1-RSRP computation, until $Z'_3$ symbols after a last symbol of a latest one of a CSI-RS/SSB resource for channel measurement for L1-RSRP computation in each transmission occasion.

An aperiodic CSI report occupies CPU(s) from a first symbol after a PDCCH triggering a CSI report until a last symbol between $Z_3$ symbols after the first symbol after the PDCCH triggering the CSI report and $Z'_3$ symbols after a last symbol of a latest one of each CSI-RS/SSB resource for channel measurement for L1-RSRP computation. In other words, the CPU is occupied from the first symbol after the PDCCH to max $(Z_3, Z'_3)$.

If a UE only has $M$ CPUs available and is triggered with $N>M$ reports, the UE should update the $M$ reports with a highest priority according to the priority rule in Section 5.2.5 in 3GPP TS 38.214.

If a UE supports $X$ simultaneous CSI calculations, a UE is not expected to be configured with an aperiodic CSI trigger state containing more than X CSI reports settings across all CCs.

Processing of a CSI report occupies a number of CPUs for a number of symbols as follows:

- $O_{CPU}$ = 0 for a CSI report with CSI-ReportConfig with higher layer parameter *reportQuantity* set to 'none' and *CSI-RS-ResourceSet* with higher layer parameter *trs-Info* configured

  - To reflect that TRS does not occupy a CPU

- $O_{CPU}$ = 1 for a CSI report with *CSI-ReportConfig* with higher layer parameter *reportQuantity* set to 'cri-RSRP', 'ssb-Index-RSRP' or 'none' (and *CSI-RS-ResourceSet* with higher layer parameter *trs-Info* not configured)

  - For "none", to reflect that P3 in beam management procedure occupies one CPU process.
  - Also, regardless the number of CSI-RS within the resource set used for beam management, only one CPU is occupied. This differs when other CSI reports are configured.
  - A CSI report based on $K_s$ CSI-RS resources may be roughly equivalent to compute $K_s$ CSI reports in terms of CSI computation time. However, for an L1-RSRP report based on $K_s$ CSI-RS/SSB resources, a UE may just compute receive power on each CSI-RS or SSB not necessarily consuming $K_s$ CPUs.

- For a CSI report with *CSI-ReportConfig* with higher layer parameter *reportQuantity* set to'cri-RI-PMI-CQI', 'cri-RI-i1', 'cri-RI-i1-CQI', 'cri-RI-CQI', or'cri-RI-LI-PMI-CQI',

  - if a CSI report is aperiodically triggered without transmitting a PUSCH with either TB or HARQ-ACK or both, when $L$ = 0 CPUs are occupied, where the CSI corresponds to a single CSI with wideband frequency-granularity and to at most 4 CSI-RS ports in a single resource without CRI report and where *codebookType* is set to 'typeI-SinglePanel' or where *reportQuantity* is set to 'cri-RI-CQI', $O_{CPU} = N_{CPU}$,

    - For the low latency CSI report, and no UL-SCH TB, all CPUs are occupied for the UE to prepare the quick report with short timeline.

  - otherwise, $O_{CPU} = K_s$, where $K_s$ is the number of CSI-RS resources in the CSI-RS resource set for channel measurement.

    - $K_s$ CPUs are occupied in other cases because each CSI-RS is equivalent to compute CSI reports.

## Maximum Number of Active CSI-RS

In addition to a number of CPUs, a UE can indicate, to a gNB, other information about a maximum number "active" CSI-RSs and CSI-RS ports that can be handled simultaneously via capability signaling: *maxNumberSimultaneousNZP-CSI-RS-PerCC* and *totalNumberPortsSimultaneousNZP-CSI-RS-PerCC.*

A definition of when a CSI-RS is considered "active" varies depending on its nature as follows.

- For an A-CSI-RS, starting from an end of a PDCCH containing a request, and ending at the end of a PUSCH containing a report associated with this A-CSI-RS.
- For an SP-CSI-RS, starting from an end of an activation command being applied, and ending at the end of a deactivation command being applied.
- For a P-CSI-RS, an activate duration ends when a P-CSI-RS configuration is released.

If a CSI-RS resource is referred *N* times by one or more CSI reporting settings, the CSI-RS resource and the CSI-RS ports within the CSI-RS resource are counted *N* times.

Various embodiments of the present disclosure will be described below.

Although the embodiments will be generally described with reference to processing a CSI-RS in an FD operation mode, the embodiments can also be applied when a gNB deploys network energy saving (NES) procedures such as spatial domain adaptation or power domain adaptation.

More specifically, in both FD and NES operations, a gNB may need to adjust its transmission and reception panels by enabling/disabling all or subset of antenna elements associated to a logical antenna port or by using different transmit power. In an FD operation, the gNB may need the spatial domain adaptation or power domain adaptation to reduce the self-interference to reasonable level. In an NES operation, the gNB may need the spatial domain adaptation or power domain adaptation to reduce the power consumption.

A scenario in which different instances of the same CSI-RS or different CSI-RSs associated with a same CSI report collide with a UL subband in an SBFD symbol and become non-contiguous in the frequency domain may correspond to particular NES spatial domain or power domain pattern or sub-configuration. However, for a scenario in which the instances of the same CSI-RS or other CSI-RSs associated with the same CSI report do not collide with a UL subband in a non-SBFD symbol and remain contiguous in the frequency domain may correspond to another NES spatial domain or power domain pattern or sub-configuration. In other words, in the context of an FD operation, an SBFD and a non-SBFD may correspond to two NES spatial domain or power domain patterns or sub-configurations.

Accordingly, the various embodiments described for contiguous CSI-RS and non-contiguous CSI-RS may also be applied when the same CSI-RS or different CSI-RSs are associated with different NES spatial domain or power domain patterns or sub-configurations.

**Processing Time**

When a CSI-RS collides with a UL subband, the same CSI-RS may occupy non-contiguous RBs. Consequently, a UE may need extra time to process non-contiguous CSI-RSs, compared with a legacy contiguous CSI-RS.

In accordance with an embodiment of the disclosure, additional processing time for the non-contiguous CSI-RS may be predefined, e.g., provided in standard specifications, and added to an existing minimum time duration normally set for a CSI-RS based on the associated CSI report.

For an aperiodic CSI reporting based on an AP-CSI-RS for CM, an AP-CSI-RS for IM, or an AP-CSI-IM, a predefined value $\Delta$ may be added to $Z'_{ref}$ value, where $Z'_{ref}$ may be determined based on legacy procedures as described above for example.

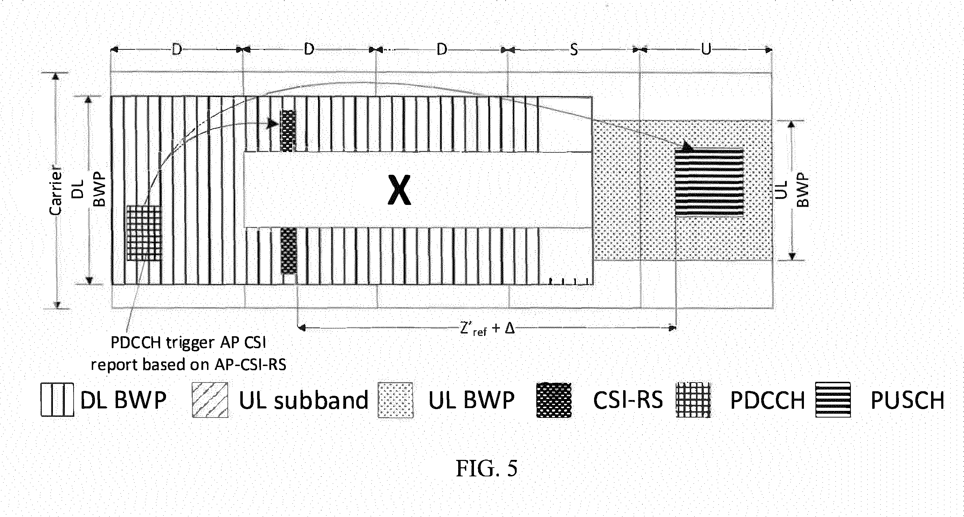

FIG. 5 illustrates an example of a predefined value $\Delta$ being added to a $Z'_{ref}$ value for a non-contiguous CSI-RS, according to an embodiment. More specifically, FIG. 5 illustrates an example of a PDCCH triggering an aperiodic CSI report based on an AP-CSI-RS that collides with a UL subband and becomes a non-contiguous CSI-RS.

Referring to FIG. 5, a minimum required gap ($Z'_{ref} + \Delta$) is provided between a last symbol carrying an AP-CSI-RS and a first symbol of PUSCH carrying the AP-CSI report to allow the UE process the CSI report.

The value of $\Delta$ may depend on subcarrier spacing. For example, a predefined table, e.g., provided in standard specifications, may be used to determine the value of $\Delta$ based on $\mu$, which may be min ($\mu_{PDCCH}$, $\mu_{CSI-RS}$, $\mu_{UL}$), where $\mu_{PDCCH}$ corresponds to the subcarrier spacing of a PDCCH with which DCI was transmitted, $\mu_{UL}$ corresponds to the subcarrier spacing of a PUSCH with which a CSI report is to be transmitted, and $\mu_{CSI-RS}$ corresponds to a minimum subcarrier spacing of the aperiodic CSI-RS triggered by the DCI.

A legacy UE's behavior that depends on $Z'_{ref}$ may be applied based on $Z'_{ref} + \Delta$ instead of $Z'_{ref}$ when a CSI-RS is non-contiguous. For example, if $Z'_{ref} + \Delta$ is not satisfied, the UE may ignore the scheduling DCI, if the number of triggered reports is one and no HARQ-ACK or transport block is multiplexed on the PUSCH. Otherwise, the UE is not required to update the CSI for the n-th triggered CSI report associated with this non-contiguous CSI-RS.

Moreover, when the same DCI triggers multiple aperiodic CSI reports, the value of Z and Z' may be

$$Z = \max_{m=0,...,M-1}(Z(m)) \quad \text{and} \quad Z' = \max_{m=0,...,M-1}(Z'(m))$$

, where $M$ is the number of updated CSI report(s) determined based on the available CPUs, and ($Z(m)$, $Z'(m)$) corresponds to the $m$-th updated CSI report.

For a CSI-RS that does not collide with a UL subband, i.e., a contiguous CSI-RS, the corresponding Z and Z' may be determined based on a legacy approach.

For a CSI-RS that collides with a UL subband, i.e., a non-contiguous CSI-RS, the corresponding Z' may be determined based on a legacy approach in addition to an offset $\Delta$ as described herein. Moreover, for a non-contiguous CSI-RS, the value Z may be determined according to legacy approaches, or an additional offset may be added similar to the offset added for Z'.

When a P/SP CSI-RS is used for CM or IM for an aperiodic CSI report, a UE may not expect to measure a channel or interference using a non-contiguous CSI-RS whose last symbol is received up to Z' + $\Delta$ symbols before the transmission time of a first OFDM symbol of a PUSCH carrying the aperiodic CSI reporting. Moreover, for defining a CSI reference resource used in the determination of an earliest CSI-RS that can be used deriving CSI, $n_{CSI\_ref}$ is a smallest value greater than or equal $\left\lfloor (Z' + \Delta)/N_{symb}^{slot} \right\rfloor$, such that $n - n_{CSI\_ref}$ corresponds to a valid downlink slot and n is the slot for transmitting CSI report.

Not all P/SP CSI-RSs associated with a particular resource set will collide with the UL subband, i.e., some P/SP CSI-RS occasions will collide while others will not. In this case, to simplify UE implementation, a single timeline may be defined for determining the CSI reference resource, regardless whether CSI-RS collides with UL subband or not.

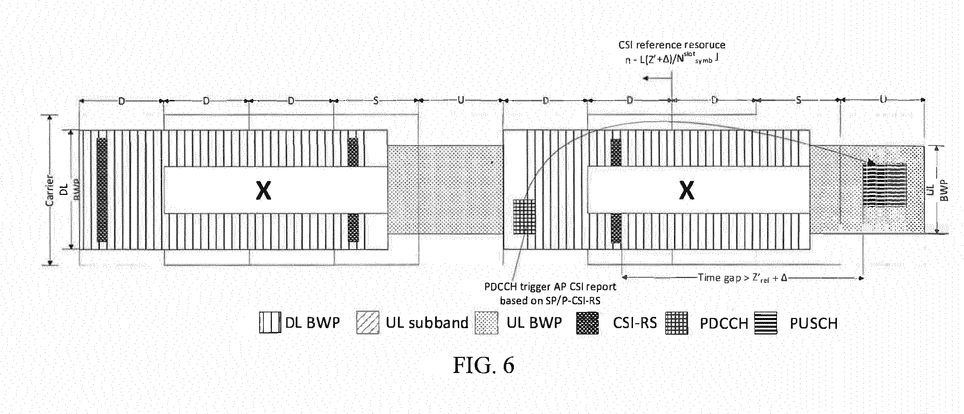

FIG. 6 illustrates an example of adjusting a CSI reference resource and Z' by $\Delta$, according to an embodiment. More specifically, FIG. 6 shows an example of an aperiodic CSI report being triggered based on a P/SP CSI-RS, where some of the P/SP CSI-RS occasions fall in non-SBFD symbols while others fall in SBFD symbols.

Referring to FIG. 6, the timeline for determining the CSI reference resource and minimum time gap between the P/SP CSI-RS and PUSCH is adjust by $\Delta$.

In legacy NR, for P/SP CSI reporting based on a P/SP CSI-RS, $n_{CSI\_ref}$ is equal to predefined values provided in the specifications based DL numerology and whether or not beam measurement should be conducted. Specifically, $n_{CSI\_ref}$ =4 for 15kHz, $n_{CSI\_ref}$ =8 for 30kHz, $n_{CSI\_ref}$ =16 for 60kHz, and $n_{CSI\_ref}$ =32 for 120kHz in case of a CSI report without a CRI. When CSI reporting is with a CRI, $n_{CSI\_ref}$ =5 for 15kHz, $n_{CSI\_ref}$ =10 for 30kHz, $n_{CSI\_ref}$ =20 for 60kHz, and $n_{CSI\_ref}$ =40 for 120kHz. When some P/SP CSI-RSs associated with a P/SP CSI collide with a UL subband (not necessarily all of them), an additional offset $\Delta$, e.g., provided in the specifications, may be added to the legacy predefined value. For example, for 15 kHz and a CSI report without a CRI, $n_{CSI\_ref}$ =4 + $\Delta$. Additionally, for 15 kHz and a CSI report with a CRI, $n_{CSI\_ref}$ =5 + $\Delta$.

Alternatively, a UE may indicate, to the gNB, the supported offset value(s), e.g., $\Delta$, via capability signaling. In this case, the UE may assume that an indicated offset is added to the different parameter for determining the proper timeline.

Although the description above adds the same offset value $\Delta$ to different parameters used for determining the applicable timeline, e.g., Z', $n_{CSI\_ref}$, etc., in distinct cases, e.g., aperiodic reporting, periodic reporting, etc., the offset values can vary. For example, several offset values may be predefined or indicated by the UE as part of its capability signaling for different CSI reporting types.

Rather than having an offset value $\Delta$ added to different parameters to determine the proper timeline, new tables determining Z or Z' may be provided and applied when a CSI-RS is non-contiguous. In this case, all of the parameters that depend on Z or Z' will automatically reflect the extra processing time needed for the UE. Nevertheless, a predefined offset or one indicated via UE capability signaling to a gNB may be still be needed for other parameters that do not depend on Z or Z', such as P/SP CSI reporting based on a P/SP CSI-RS.

Table 2 below shows an example of defining Z and Z' for non-contiguous CSI-RS. In legacy NR, there are different timelines for different CSI report quantities. To date, there are (Z1, Z' 1), (Z2, Z'2), and (Z3, Z'3). Therefore, Table 2 provides (Z4, Z'4) as new values to be added to the existing set of values.

Table 2

| $\mu$ | $Z_4$ [symbols] | |
|---|---|---|
| | $Z_4$ | $Z'_4$ |
| 0 | 11 | 8 |
| 1 | 14 | 22 |
| 2 | 26 | 22 |

(continued)

| μ | $Z_4$ [symbols] | |
|---|---|---|
| | $Z_4$ | $Z'_4$ |
| 3 | 44 | 27 |

Separate tables may be defined for a low complexity (or low latency) aperiodic CSI reports defined as a CSI report including wideband frequency-granularity reporting based on non-contiguous CSI-RS. Another table may be defined for a non-contiguous CSI-RS used for beam management. In addition, another table may be defined for a remaining CSI report, i.e., high complexity (or high latency), associated with a non-contiguous CSI-RS.

Some of the entries for the predefined Z and Z' may depend on UE capability signaling. For example, if a non-contiguous CSI-RS is used for beam management, e.g., associated with RSRP reporting indicted by a report quantity "cri-RSRP", some entries may depend on parameters indicated via UE capability signaling. This capability signaling may be separate from the capability signaling associated with a legacy CSI-RS, e.g., *beamSwitchTiming* or *beamReportTiming,* and used for indicating $X'_i$, i=0, 1, 2, 3, and KBi, i = 1, 2, as shown in Table 3 below. The value of $X'_i$ may be in unit of symbols representing the needed time for processing the CSI report. This approach provides further flexibility as the UE may indicate the preferred values rather than using predefined ones.

Table 3

| μ | $Z_4$ [symbols] | |
|---|---|---|
| | $Z_4$ | $Z'_4$ |
| 0 | 22 | $X'_0$ |
| 1 | 33 | $X'_1$ |
| 2 | $\min(44, X'_2+KB_1)$ | $X'_2$ |
| 3 | $\min(97, X'_3+KB_2)$ | $X'_3$ |

Alternatively, the same capability signaling used for a non-contiguous CSI-RS may be used for beam management. In this case, the UE may report the largest needed time in order to ensure that the UE has enough time for both legacy and non-contiguous CSI-RSs.

With a PRG configured as wideband and a PDSCH occupying non-contiguous RBs in non-contiguous DL subbands around a UL subband, channel estimation may become more complicated than a legacy wideband PRG occupying contiguous RBs. Therefore, a PDSCH processing timeline may be relaxed to capture the impact of the additional processing for wideband PRG over non-contiguous RBs. For example, additional *d3* may be added to the timeline, as shown Equation (1) below, between a last symbol of a PDSCH and a first symbol of a PUCCH that carries HARQ-ACK information to determine whether a UE shall provide a valid HARQ-ACK message.

$$T_{Proc,1} = (N_1 + d_{1,1} + d_2 + d_3)(2048 + 144) \cdot k2^{-\mu} \cdot T_C + T_{ext}$$

$$\ldots (1)$$

The value of *d3* may be predefined or a UE may indicate the value *d3* to a gNB via capability signaling.

When a PDSCH is scheduled/configured over contiguous RBs in any of the DL subbands, not spanning both DL subbands, or in non-SBFD symbols/slots, then *d3* = 0.

If a UE indicates support of a processing capability 2 or is configured to apply it in a particular CC, the UE may default to processing capability 1 when a PDSCH spans non-contiguous DL subbands and a PRG is configured as wideband. Otherwise, the PDSCH is fully confined in one of the DL subband, and processing capability 2 is applied.

Even if a PRG is not configured as wideband, the PDSCH processing timeline relaxation may be applied when a PDSCH is scheduled to occupy contiguous RBs, e.g., via non-interleaved type 1, and the PDSCH becomes non-contiguous due to the presence of the UL subband.

One method to handle this situation is that a UE treats a wideband PRG as if the PRG is configured with size 2 or 4. The selected PRG size may be predefined or configured by a gNB. Moreover, the selected PRG size may depend a number of allocated RBs for each portion of a PDSCH above and below the UL subband. For example, if the number of allocated RBs in a particular portion of the PDSCH is below certain threshold, the UE may assume that a PRG size is 2; otherwise, the PRG size is 4. The value of the threshold may be configured by higher layer signaling or predefined.

The UE may indicate, to the gNB, via its capability signaling, e.g., how it will handle this situation. The UE inform the gNB whether it will consider a non-contiguous PDSCH with a wideband PRG as if the PRG is of size 2 or 4, any other size, or if the UE will apply wideband processing over each portion, over particular portion of the non-contiguous PDSCH (e.g., the one with more RBs), or both portions. Moreover, the UE may inform the gNB whether relaxation of the PDSCH processing timeline is needed. If needed, the UE may also inform the gNB of the additional relaxation time needed by the UE.

**Impact on CPU Occupation**

In legacy NR, a UE indicates, to a gNB, a total number available CPUs within a CC and across all CCs via capability signaling, i.e., *simultaneousCSI-ReportsPerCC* and *simultaneousCSI-ReportsAllCC*.

In one method, a single CPU pool may be used for both a legacy CSI-RS and a non-contiguous CSI-RS. This pool may be indicated via legacy capability signaling.

In another method, new capability signaling may be defined for indicating a dedicated pool of CPUs for a non-contiguous CSI-RS per CC and across all CCs.

In terms of when the CPU is occupied, legacy rules can be applied, but the parameters related to the CSI reference resource, Z, and/or Z', are determined as described above.

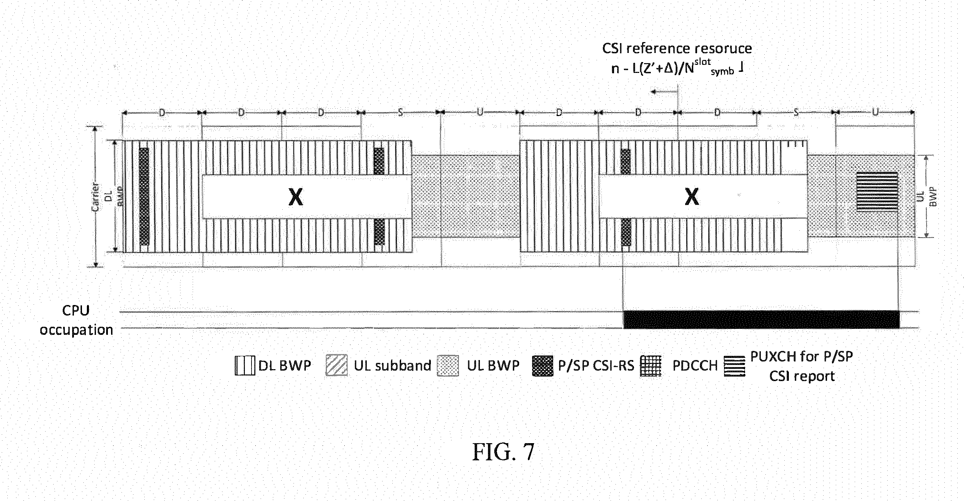

FIG. 7 illustrates an example of CPU occupation for P/SP CSI reporting based on a P/SP non-contiguous CSI-RS, according to an embodiment.

Referring to FIG. 7, a P/SP CSI report (excluding an initial SP CSI report on a PUSCH after a PDCCH triggering the report) occupies a CPU from an earliest symbol of the non-contiguous CSI-RS, no later than a CSI reference resource calculated as described earlier, to the end of a PUXCH, where X can be either {C, S} referring to PUCCH or PUSCH carrying report.

Determining the number of occupied CPUs due to the non-contiguous CSI-RS may be important to ensure that simultaneous reports do not exceed a UE's capability.

One method is that legacy rules are applied to determine the number of occupied CPUs. Nevertheless, this approach may not accurately reflect the additional processing required at the UE side.

For a CSI report for beam management, e.g., *reportQuantity* set to 'cri-RSRP', 'ssb-Index-RSRP' or 'none', and associated with a non-contiguous CSI-RS, the number of occupied CPUs denoted by $O_{CPU}$ may be X instead of 1, and in case of a legacy CSI-RS, e.g., X = 2.

Alternatively, the number of CPUs to be occupied in this case, i.e., a non-contiguous CSI-RS used for beam management, can be indicated by UE capability signaling. The indication can provide a gNB with an absolute number of CPUs to be occupied when a CSI report is associated with a non-contiguous CSI-RS, e.g., X. Alternatively, the indication can provide the gNB with an additional number of CPUs to be added to a number of CPUs that would normally be occupied in case of a legacy contiguous CSI-RS.

For a CSI report for channel measurement, e.g., with *CSI-ReportConfig* with higher layer parameter *report-Quantity* set to 'cri-RI-PMI-CQI', 'cri-RI-i1', 'cri-RI-i1-CQI', 'cri-RI-CQI', or 'cri-RI-LI-PMI-CQI', the number of occupied CPUs may be determined as follows:

- (legacy rule) if a CSI report is aperiodically triggered without transmitting a PUSCH with a TB, a HARQ-ACK, or both, when $L = 0$ CPUs are occupied, where the CSI corresponds to a single CSI with wideband frequency-granularity and to at most 4 CSI-RS ports in a single resource without a CRI report and where *codebookType* is set to 'typeI-SinglePanel' or where *reportQuantity* is set to 'cri-RI-CQI', $O_{CPU} = N_{CPU}$,

- otherwise, $O_{CPU} = K'_s + X * K''_s$, where $K'_s$ is the number of legacy contiguous CSI-RS resources and $K''_s$ is the number of non-contiguous CSI-RS resources in the CSI-RS resource set for channel measurement and X is a scale factor reflecting the additional processing of the non-contiguous CSI-RS, e.g., X=2. In other words, each non-contiguous CSI-RS occupies X CPUs, instead of 1, in case of a legacy contiguous CSI-RS. Alternatively, the number of CPUs to be occupied in this case, i.e., a non-contiguous CSI-RS used channel measurement, can be indicated by UE capability signaling. The indication from the UE to the gNB can provide the gNB with an absolute number of CPUs to be occupied when the CSI report is associated with non-contiguous CSI-RS, e.g., X. As another possibility, the indication can provide the gNB with the additional number of CPUs to be added to the number of CPU that would normally be occupied in case of a legacy contiguous CSI-RS.

This concept may also be applied to NES procedures based on spatial domain pattern adaptation or power domain pattern adaptation or configuring multiple sub-configurations associated with different adaptation pattern. Assuming two spatial domain patterns or two power domain patterns or two sub-configurations to be reported, $O_{CPU} = K'_s + X*K''_s$, where $K'_s$ is the number of CSI-RS resources in the CSI-RS resource set associated with a first NES spatial domain pattern or power domain pattern or sub-configuration, i.e., analogous to the number of non-contiguous CSI-RS resources in an FD operation, and $K''_s$ is the number of CSI-RS resources in the CSI-RS resource set associated with a second NES spatial domain or power domain pattern or sub-configuration, i.e., analogous to the number of contiguous CSI-RS resources in an FD operation, and X is a scale factor reflecting the additional processing of the additional pattern or sub-configuration, i.e., analogous to non-contiguous CSI-RS resources, e.g., X=1.

Although the description above is directed to two NES spatial domains patterns or two power domain patterns or two sub-configurations, it may also be applied for more than two patterns or sub-configurations. In this case,

$$O_{CPU} = \sum_{i=1}^{N} K_s^i$$

, where $N$ is the number of patterns or sub-configurations to be reported and $K_s^i$ is the number of CSI-RS resources in the CSI-RS resource set associated with the $i^{th}$ pattern or sub-configuration.

If a particular report associated with a non-contiguous CSI-RS that occupies more than 1 CPU representing each portion of the non-contiguous CSI-RS and not enough needed CPUs are available, the UE may not update the associated CSI report.

In legacy NR, a CSI-RS can be used as a TRS. In this case, a CSI report with a CSI-*ReportConfig* with a higher layer parameter *reportQuantity* is set to 'none' and a *CSI-RS-ResourceSet* with a higher layer parameter *trs-Info* is configured and $O_{CPU} = 0$.

Although TRS-based TDCP reporting is generally stand-alone auxiliary information, separate from a legacy CSI reporting framework, it may be beneficial to determine additional processing overhead for calculating TDCP based on a TRS.

One method is to use a legacy $O_{CPU}$ to capture UE processing overhead. Specifically, when a TRS is used for reporting TDCP, the number of occupied CPUs may be determined by $O_{CPU} = K$, where K may be predefined, e.g., K = 1, which is similar to a CSI-RS used for beam management. Alternatively, K may be equal to the number of TRS resources linked to a TDCP report. Moreover, the UE may indicate the value of K, to the gNB, via capability signaling to better reflect the UE implementation.

To avoid negative impact of CSI framework, a separate pool of resources can be used for defining a UE capability for handling a TRS when it is used for reporting TDCP. Specifically, the UE may indicate, to the gNB, a maximum number of TDCP reports that can be calculated per CC or across all CCs simultaneously. For example, the UE may indicate such information to the gNB via capability signaling that is separate from a maximum number of CSI reports per CC or across all CCs. This value can be referred to as $N_{CPU, TDCP}$. The number of occupied CPUs from the separate TDCP report pool can be determined as described when TDCP share the same pool with a regular CSI report.

Regardless of using a separate or shared CPU pool, for aperiodic TDCP reporting, the CPU(s) may be occupied from a first symbol after a PDCCH triggering a CSI report until a last symbol of a PUSCH/PUCCH carrying the report. For a periodic or semi-persistent TDCP reporting, same rules as in legacy CSI framework can be used to determine when a CPU is occupied.

If a UE only has $M$ CPUs available and is triggered with $N>M$ reports, the UE should update the $M$ reports with a highest priority according to a priority rule. The priority rules for TDCP can be lower than other CSI reports, same as CSI report(s) not carrying L1-RSRP or L1-SINR, or higher than other CSI reports.

Regarding the processing timeline for TDCP, it can be similar legacy CSI reporting or additional delay may be used, as described above for a non-contiguous CSI-RS.

**Impact on CSI-RS Counting**

In legacy NR, a UE can indicate, to a gNB, other information about a maximum number of simultaneous "active" CSI-RS and CSI-RS port per CC that the UE can handle via capability signaling: *maxNumberSimultaneousNZP-CSI-RS-PerCC* and *totalNumberPortsSimultaneousNZP-CSI-RS-PerCC.* A definition of when a CSI-RS is considered "active" varies depending on its nature as follows.

- For an A-CSI-RS, starting from an end of a PDCCH including a request, and ending at the end of a PUSCH containing a report associated with the A-CSI-RS.
- For an SP-CSI-RS, starting from the end of an activation command being applied, and ending at the end of a deactivation command being applied.
- For a P-CSI-RS, an activate duration ends when a P-CSI-RS configuration is released.

With the presence of a non-contiguous CSI-RS, it may be important to determine how it should counted towards a maximum number of simultaneous active CSI-RSs and CSI-RS ports per CC.

One method is that a non-contiguous CSI-RS is counted as 1+X, where X captures the impact of having the non-contiguous CSI-RS. The value of X may be predefined, e.g., X=1.

Alternatively, the UE can indicate, to the gNB, the value of X via capability signaling. Also, the UE can indicate an absolute value of how a CSI-RS should be counted towards a limit of CSI-RSs and CSI-RS ports per CC, rather than indicating X as an incremental value.

Additionally, the UE may inform the gNB of a maximum number of non-contiguous CSI-RSs and non-contiguous CSI-RSs that can be activated simultaneously. In other words, the UE indicates, to the gNB, two different pools for the maximum number of CSI-RSs that can be activated simultaneously, where one pool is for legacy CSI-RSs and another pool is non-contiguous CSI-RSs and each type of CSI-RS is counted towards its associated pool.

Regarding the determination of when the non-contiguous CSI-RS is active, the same rules for legacy contiguous CSI-RS may be applied.

## CSI-RS Spanning Multiple SBFD and Non-SBFD Symbols

A CSI-RS port may occupy contiguous OFDM symbols. If some of those OFDM symbols are SBFD symbols and others are non-SBFD, this may be problematic for a UE when estimating a channel, interference, or conducting beam measurement. For example, a gNB may use different antenna elements, different transmit powers, apply different beams, etc., in non-SBFD symbols and SBFD symbols, which may corrupt the measurement associated with the CSI-RS port.

More specifically, a UE may not expect the same CSI-RS port to span an SBFD symbol and a non-SBFD symbol. Accordingly, to provide a gNB with more flexibility, the same CSI-RS port may span SBFD and non-SBFD symbols with the assumption that the gNB uses the same antenna elements, the transmit power is fixed, and the same beam is applied across all the symbols spanned by the CSI-RS port.

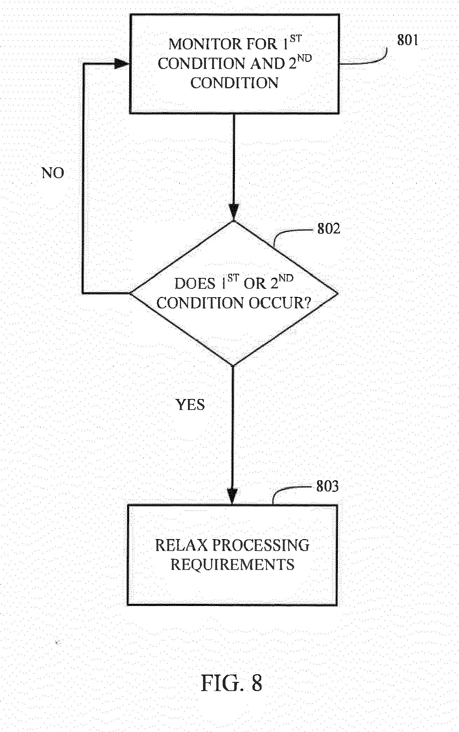

FIG. 8 is a flowchart illustrating a method performed by a terminal, according to an embodiment.

Referring to FIG. 8, in step 801, the terminal monitors for a first condition, i.e., whether CSI-RS or PDSCH overlaps with a UL subband in an SBFD operation and becomes non-contiguous in the frequency domain, and a second condition, i.e., whether different network antenna patterns or power patterns in a network energy saving operation are used for the transmission of a CSI-RS. As described above, relaxing processing requirements in terms of timeline and occupied computational resources may be relaxed when a signal, e.g., a CSI-RS, or a channel, e.g., a PDSCH, collides with a UL subband for an SBFD operation.

In step 802, the terminal determines if either of the $1^{st}$ or $2^{nd}$ monitored conditions occurs.

In step 803, in response to determining that the $1^{st}$ or $2^{nd}$ monitored condition occurs, the terminal relaxes the processing requirements related to a processing timeline and/or occupied computational resources.

For example, as described above, for an aperiodic CSI report, a minimum processing period may be determined using $Z' + \Delta$, or a processing timeline of the PDSCH may be relaxed by adding d3 to a contiguous PDSCH processing timeline.

As another example, for a periodic or semi-periodic CSI report, a CSI reference resource may be increased by $\Delta$.

As yet another example, a number of occupied CPUs may be increased by a factor X, where X is a scale factor reflecting additional processing of a non-contiguous CSI-RS.

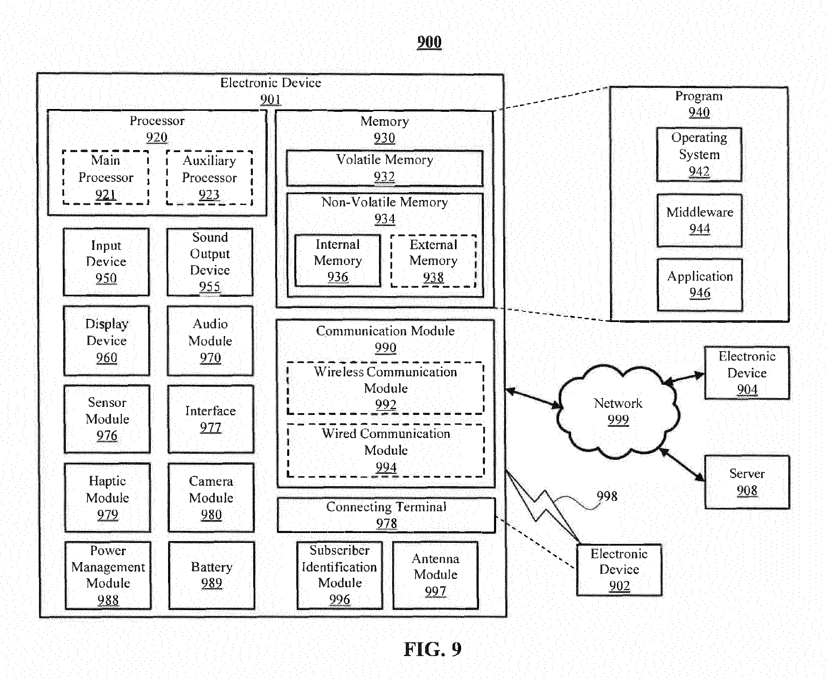

FIG. 9 is a block diagram of an electronic device in a network environment 900, according to an embodiment.

Referring to FIG. 9, an electronic device 901 in a network environment 900 may communicate with an electronic device 902 via a first network 998 (e.g., a short-range wireless communication network), or an electronic device 904 or a server 908 via a second network 999 (e.g., a long-range wireless communication network). The electronic device 901 may communicate with the electronic device 904 via the server 908. The electronic device 901 may include a processor 920, a memory 930, an input device 950, a sound output device 955, a display device 960, an audio module 970, a sensor module 976, an interface 977, a haptic module 979, a camera module 980, a power management module 988, a battery 989, a communication module 990, a subscriber identification module (SIM) card 996, or an antenna module 997. In one embodiment, at least one (e.g., the display device 960 or the camera module 980) of the components may be omitted from the electronic device 901, or one or more other components may be added to the electronic device 901. Some of the components may be implemented as a single integrated circuit (IC). For example, the sensor module 976 (e.g., a fingerprint sensor, an iris sensor, or an illuminance sensor) may be embedded in the display device 960 (e.g., a display).

The processor 920 may execute software (e.g., a program 940) to control at least one other component (e.g., a hardware or a software component) of the electronic device 901 coupled with the processor 920 and may perform various data processing or computations. For example, the processor 920 may execute software to perform the method illustrated in FIG. 8.

As at least part of the data processing or computations, the processor 920 may load a command or data received from another component (e.g., the sensor module 976 or the communication module 990) in volatile memory 932, process the command or the data stored in the volatile memory 932, and store resulting data in non-volatile memory 934. The processor 920 may include a main processor 921 (e.g., a central processing unit (CPU) or an application processor (AP)), and an auxiliary processor 923 (e.g., a graphics processing unit (GPU), an image signal processor (ISP), a sensor hub processor, or a communication processor (CP)) that is operable independently from, or in conjunction with, the main processor 921. Additionally or alternatively, the auxiliary processor 923 may be adapted to consume less power than the main processor 921, or execute a particular function. The auxiliary processor 923 may be implemented as being separate from, or a part of, the main processor 921.

The auxiliary processor 923 may control at least some of the functions or states related to at least one component (e.g., the display device 960, the sensor module 976, or the communication module 990) among the components of the electronic device 901, instead of the main processor 921 while the main processor 921 is in an inactive (e.g., sleep) state, or together with the main processor 921 while the main processor 921 is in an active state (e.g., executing an application). The auxiliary processor 923 (e.g., an image signal processor or a communication processor) may be implemented as part of another component (e.g., the camera module 980 or the communication module 990) functionally related to the auxiliary processor 923.

The memory 930 may store various data used by at least one component (e.g., the processor 920 or the sensor module 976) of the electronic device 901. The various data may include, for example, software (e.g., the program 940) and input data or output data for a command related thereto. The memory 930 may include the volatile memory 932 or the non-volatile memory 934. Non-volatile memory 934 may include internal memory 936 and/or external memory 938.

The program 940 may be stored in the memory 930 as software, and may include, for example, an operating system (OS) 942, middleware 944, or an application 946.

The input device 950 may receive a command or data to be used by another component (e.g., the processor 920) of the electronic device 901, from the outside (e.g., a user) of the electronic device 901. The input device 950 may include, for example, a microphone, a mouse, or a keyboard.

The sound output device 955 may output sound signals to the outside of the electronic device 901. The sound output device 955 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 960 may visually provide information to the outside (e.g., a user) of the electronic device 901. The display device 960 may include, for example, a display, a hologram device, or a projector and control circuitry to control a corresponding one of the display, hologram device, and projector. The display device 960 may include touch circuitry adapted to detect a touch, or sensor circuitry (e.g., a pressure sensor) adapted to measure the intensity of force incurred by the touch.

The audio module 970 may convert a sound into an electrical signal and vice versa. The audio module 970 may obtain the sound via the input device 950 or output the sound via the sound output device 955 or a headphone of an external electronic device 902 directly (e.g., wired) or wirelessly coupled with the electronic device 901.

The sensor module 976 may detect an operational state (e.g., power or temperature) of the electronic device 901 or an environmental state (e.g., a state of a user) external to the electronic device 901, and then generate an electrical signal or data value corresponding to the detected state. The sensor module 976 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 977 may support one or more specified protocols to be used for the electronic device 901 to be coupled with the external electronic device 902 directly (e.g., wired) or wirelessly. The interface 977 may include, for example, a high- definition multimedia interface (HDMI), a universal serial bus (USB) interface, a secure digital (SD) card interface, or an audio interface.

A connecting terminal 978 may include a connector via which the electronic device 901 may be physically connected with the external electronic device 902. The connecting terminal 978 may include, for example, an HDMI connector, a USB connector, an SD card connector, or an audio connector (e.g., a headphone connector).

The haptic module 979 may convert an electrical signal into a mechanical stimulus (e.g., a vibration or a movement) or an electrical stimulus which may be recognized by a user via tactile sensation or kinesthetic sensation. The haptic module 979 may include, for example, a motor, a piezoelectric element, or an electrical stimulator.

The camera module 980 may capture a still image or moving images. The camera module 980 may include one or more lenses, image sensors, image signal processors, or flashes. The power management module 988 may manage power supplied to the electronic device 901. The power management module 988 may be implemented as at least part of, for example, a power management integrated circuit (PMIC).

The battery 989 may supply power to at least one component of the electronic device 901. The battery 989 may include, for example, a primary cell which is not rechargeable, a secondary cell which is rechargeable, or a fuel cell.

The communication module 990 may support establishing a direct (e.g., wired) communication channel or a wireless communication channel between the electronic device 901 and the external electronic device (e.g., the electronic device 902, the electronic device 904, or the server 908) and performing communication via the established communication channel. The communication module 990 may include one or more communication processors that are operable independently from the processor 920 (e.g., the AP) and supports a direct (e.g., wired) communication or a wireless communication. The communication module 990 may include a wireless communication module 992 (e.g., a cellular communication module, a short-range wireless communication module, or a global navigation satellite system (GNSS) communication module) or a wired communication module 994 (e.g., a local area network (LAN) communication module or a power line communication (PLC) module). A corresponding one of these communication modules may communicate with the external electronic device via the first network 998 (e.g., a short-range communication network, such as BLUETOOTH™, wireless-fidelity (Wi-Fi) direct, or a standard of the Infrared Data Association (IrDA)) or the second network 999 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 992 may identify and authenticate the electronic device 901 in a communication network, such as the first network 998 or the second network 999, using subscriber information (e.g., international mobile subscriber identity (IMSI)) stored in the subscriber identification module 996.

The antenna module 997 may transmit or receive a signal or power to or from the outside (e.g., the external electronic device) of the electronic device 901. The antenna module 997 may include one or more antennas, and, therefrom, at least one antenna appropriate for a communication scheme used in the communication network, such as the first network 998 or the second network 999, may be selected, for example, by the communication module 990 (e.g., the wireless communication module 992). The signal or the power may then be transmitted or received between the communication module 990 and the external electronic device via the selected at least one antenna.

Commands or data may be transmitted or received between the electronic device 901 and the external electronic device 904 via the server 908 coupled with the second network 999. Each of the electronic devices 902 and 904 may be a device of a same type as, or a different type, from the electronic device 901. All or some of operations to be executed at the electronic device 901 may be executed at one or more of the external electronic devices 902, 904, or 908. For example, if the electronic device 901 should perform a function or a service automatically, or in response to a request from a user or another device, the electronic device 901, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 901. The electronic device 901 may provide the outcome, with or without further processing of the outcome, as at least part of a reply to the request. To that end, a cloud computing, distributed computing, or clientserver computing technology may be used, for example.

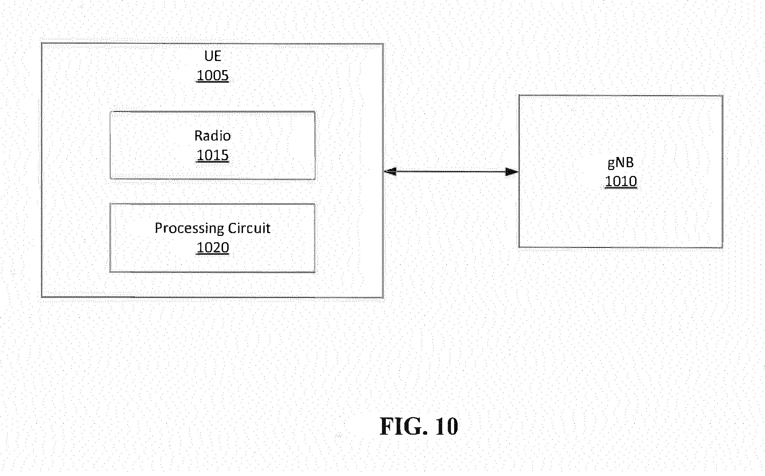

FIG. 10 shows a system including a UE 1005 and a gNB 1010, in communication with each other.

Referring to FIG. 10 the UE (or terminal) may include a radio 1015 and a processing circuit (or a means for processing) 1020, which may perform various methods disclosed herein, e.g., the method illustrated in FIG. 8. For example, the processing circuit 1020 may receive, via the radio 1015, transmissions from the network node (gNB) 1010, and the processing circuit 1020 may transmit, via the radio 1015, signals to the gNB 1010.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serialaccess memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

**Claims**

1. A method performed by a terminal in a wireless communication system, the method comprising:

   monitoring for at least one of a first condition or a second condition,

   wherein the first condition includes a channel state information (CSI)-reference signal, RS, or a physical downlink shared channel, PDSCH, overlapping with an uplink subband in a subband full-duplex operation and becoming non-contiguous in a frequency domain, and
   wherein the second condition includes different network antenna patterns or power patterns being used in a network energy saving operation for transmission of the CSI-RS; and

   relaxing processing requirements related to at least one of a processing timeline or occupied computational resources, in response to the first condition or the second condition occurring.

2. The method of claim 1, wherein in response to the first condition occurring, for an aperiodic CSI report, relaxing the processing requirements comprises determining a minimum processing period using $Z' + \Delta$,
   where $Z'$ indicates a minimum processing period starting immediately after a last symbol of the CSI-RS if it was contiguous in the frequency domain, and $\Delta$ indicates an additional processing period.

3. The method of claim 2, wherein $\Delta$ is determined based on subcarrier spacing of the CSI-RS.

4. The method of claim 3, wherein a value of $\Delta$ is predefined or transmitted, to a base station, by the terminal, via capability signaling.

5. The method of any one of claims 1 to 4, wherein in response to the first condition occurring, for a periodic or semi-periodic CSI report, relaxing the processing requirements comprises increasing a CSI reference resource by $\Delta$,
   where $\Delta$ indicates an additional processing period.

6. The method of claim 5, wherein $\Delta$ is determined based on subcarrier spacing of the CSI-RS.

7. The method of claim 6, wherein a value of $\Delta$ is predefined or transmitted, to a base station, by the terminal, via capability signaling.

8. The method of any one of claims 1 to 7, wherein in response to the first condition occurring, relaxing the processing requirements comprises relaxing the processing timeline of the PDSCH by adding d3 to a contiguous PDSCH processing timeline, where d3 indicates an additional processing period.

9. The method of claim 8, wherein a value of d3 is predefined or transmitted, to a base station, by the terminal, via capability signaling.

10. The method of any one of claims 1 to 9, wherein in response to the first condition or the second condition occurring, relaxing the processing requirements comprises increasing a number of occupied central processing units, CPUs, by a factor X, where X is a scale factor reflecting additional processing of the CSI-RS.

11. The method of claim 10, further comprising determining the number of occupied CPUs as a summation over all CSI-RSs associated with each sub-configuration for the different antenna patterns or power patterns.

12. The method of claim 10 or 11, wherein a value of X is predefined or transmitted, to a base station, by the terminal, via capability signaling.

13. A terminal for use in a wireless communication system, the terminal comprising:

 a transceiver; and
 a processor configured to perform the method of any one of claims 1 to 12.

FIG. 1

FIG. 2

P-CSI-RS

Slot n-n$_{CSI-ref}$

P/SP CSI report occasion

CPU process for
P/SP CSI report

time

FIG. 3

FIG. 4

FIG. 5

PDCCH trigger AP CSI report based on AP-CSI-RS

$Z'_{ref} + \Delta$

DL BWP · UL subband · UL BWP · DL BWP · CSI-RS · PDCCH · PUSCH

Carrier

DL BWP

UL BWP

CSI reference resoruce
$n - \lfloor (Z' + \Delta)/N^{slot}_{symb} \rfloor$

D   D   D   S   U   D   D   D   S   U

Carrier

DL BWP

UL BWP

X

X

PDCCH trigger AP CSI report
based on SP/P-CSI-RS

Time gap > $Z'_{ref} + \Delta$

DL BWP   UL subband   UL BWP   CSI-RS   PDCCH   PUSCH

FIG. 6

FIG. 7

FIG. 8

**900**

Electronic Device 901

Memory 930
Volatile Memory 932
Non-Volatile Memory 934
Internal Memory 936
External Memory 938

Program 940
Operating System 942
Middleware 944
Application 946

Processor 920
Main Processor 921
Auxiliary Processor 923

Input Device 950
Sound Output Device 955
Display Device 960
Audio Module 970
Sensor Module 976
Interface 977
Haptic Module 979
Camera Module 980
Power Management Module 988
Battery 989

Communication Module 990
Wireless Communication Module 992
Wired Communication Module 994

Connecting Terminal 978
Subscriber Identification Module 996
Antenna Module 997

Network 999

Electronic Device 904
Server 908
Electronic Device 902

998

**FIG. 9**

UE
1005

Radio
1015

Processing Circuit
1020

gNB
1010

**FIG. 10**

**EP 4 418 596 A1**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CMCC: "Discussion on network energy saving techniques", 3GPP DRAFT; R1-2209349, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20221010 - 20221019 30 September 2022 (2022-09-30), XP052277268, Retrieved from the Internet: URL:https://ftp.3gpp.org/tsg_ran/WG1_RL1/T SGR1_110b-e/Docs/R1-2209349.zip R1-2209349 Discussion on network energy saving techniques-clean.doc [retrieved on 2022-09-30] | 1,13 | INV. H04L5/00 H04W52/02 |
| Y | * page 2 - page 3; figure 1 * | 2-12 | |
| X | MINSEOK NOH ET AL: "Discussion on subband non-overlapping full duplex", 3GPP DRAFT; R1-2212438; TYPE DISCUSSION; FS_NR_DUPLEX_EVO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 1, no. Toulouse, FR; 20221114 - 20221118 7 November 2022 (2022-11-07), XP052222995, Retrieved from the Internet: URL:https://www.3gpp.org/ftp/TSG_RAN/WG1_R L1/TSGR1_111/Docs/R1-2212438.zip R1-2212438_subband_FD_operation_final.docx [retrieved on 2022-11-07] | 1,13 | TECHNICAL FIELDS SEARCHED (IPC) H04L H04W |
| Y | * page 8 - page 10; figures 5,6 * | 2-12 | |

-/--

The present search report has been drawn up for all claims

| Place of search | Date of completion of the search | Examiner |
|---|---|---|
| The Hague | 21 June 2024 | Gökceli, Selahattin |

Europäisches
Patentamt

European
Patent Office

Office européen
des brevets

**EUROPEAN SEARCH REPORT**

Application Number

EP 24 15 7570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/112869 A1 (KIM HYUNGTAE [KR] ET AL) 9 April 2020 (2020-04-09) * page 18 - page 23; claim 1 * ----- | 2-12 | |

**TECHNICAL FIELDS SEARCHED (IPC)**

The present search report has been drawn up for all claims

| Place of search | Date of completion of the search | Examiner |
|---|---|---|
| The Hague | 21 June 2024 | Gökceli, Selahattin |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 24 15 7570

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2024

| Patent document cited in search report | Publication date | Patent family member(s) | Publication date |
|---|---|---|---|
| US 2020112869 A1 | 09-04-2020 | AR 115922 A1 | 10-03-2021 |
| | | AU 2019318976 A1 | 25-06-2020 |
| | | BR 112020006430 A2 | 24-09-2020 |
| | | CA 3081676 A1 | 13-02-2020 |
| | | CL 2020000861 A1 | 09-10-2020 |
| | | CN 111164910 A | 15-05-2020 |
| | | EP 3662590 A1 | 10-06-2020 |
| | | JP 7128265 B2 | 30-08-2022 |
| | | JP 2020532922 A | 12-11-2020 |
| | | KR 20200018252 A | 19-02-2020 |
| | | PH 12020550845 A1 | 17-05-2021 |
| | | RU 2756301 C1 | 29-09-2021 |
| | | SG 11202001483R A | 30-03-2020 |
| | | TW 202015364 A | 16-04-2020 |
| | | US 2020112869 A1 | 09-04-2020 |
| | | WO 2020032432 A1 | 13-02-2020 |

EPO FORM P0459

For more details about this annex : see Official Journal of the European Patent Office, No. 12/82